# EUROPEAN PATENT SPECIFICATION

(11) **EP 2 380 695 B1**
(45) Date of publication and mention of the grant of the patent: **03.06.2015**
(21) Application number: 10731268.8
(22) Date of filing: 14.01.2010
(51) Int. Cl.: B23K 35/36, B23K 35/40, B23K 35/02, B23K 35/362, B23K 3/06

(54) **WIRE SOLDER, METHOD OF FEEDING THE SAME AND APPARATUS THEREFOR**
LÖTDRAHT, ZUFUHRVERFAHREN DAFÜR UND VORRICHTUNG DAFÜR
FIL À SOUDURE ET PROCÉDÉ ET DISPOSITIF DE DÉBITAGE DE CELUI-CI

(30) Priority: 19.01.2009 JP 2009008930
(43) Date of publication of application: 26.10.2011
(73) Proprietor: Nihon Superior Co., Ltd., Osaka 564-0063 (JP)
(72) Inventor: NISHIMURA, Tetsuro, Suita-shi Osaka 564-0063 (JP)
(74) Representative: Hering, Hartmut
(86) International application number: PCT/JP2010/050337
(87) International publication number: WO 2010/082599

(56) References cited:
- EP-A1- 1 637 268
- JP-A- H 091 380
- JP-A- H05 245 627
- JP-A- 2005 046 901
- JP-A- 2005 046 901
- JP-A- 2007 098 455
- JP-U- 58 189 093
- JP-U- S58 189 093
- US-A- 5 198 621

## Description

### Technical Field

The present invention relates to wire solder including a core wire and a supplying device therefor, and relates to wire solder having tensile resistance by combining wire solder that easily breaks by a small force with a core wire of high tension.

### Background Art

Conventionally wire solder that is linearly processed solder alloy or flux cored wire solder containing a flux component inside the wire solder typically is used as means for mounting electronic components such as a resistor, a capacitor and an IC on a printed circuit board, and these electronic components are jointed to the board by melting the solder using a soldering iron.

Wire solder, however, has drawbacks of soft and deforming easily because of its shape and characteristics, and therefore supplying devices of solder have been devised variously. Further, as electronic components have been miniaturized lately, the diameter of wire solder used also has become thinner dramatically, and wire solder of 0.1 mm or thinner in diameter also is used these days. Such a type of wire solder, however, easily breaks under a tension.

The solder proposed by Patent Document 3, which includes a plurality of pieces of wire solder twined, is not suitable for the recent mounting of electronic components requiring thinner wire diameter, and also has a problem to be solved in terms of stable supply. The solder proposed by Patent Document 4, which is obtained by processing a lead wire with solder, is not suitable for means to mount electronic components such as a resistor, a capacitor and an IC on a printed circuit board. It is also difficult for Patent Document 4 to improve the tension of the wire solder itself.

### Related Art Documents

### Patent Documents

Patent document 1: Japanese Open Gazette No. H5-245627
Patent document 2: WO 05/515
Patent document 3: Japanese Open Gazette No. 2007-98455
Patent document 4: Japanese Open Gazette No. H9-1380

US5198621 describes a a twisted cable comprising a core and conducting metal wires twisted around said core, said twisted cable characterized by said core including at least one hard steel wire, carbon fibers and resin, the steel wires may be any of galvanized specially reinforced steel wires, galvanized steel wires for a core of conventional ACSR, aluminum plated steel wires and invar wires

### Disclosure of Invention

### Problems to be Solved by the Invention

It is an object of the present invention to disclose a configuration to prevent easy break of wire solder even when using soft wire solder.

### Means for Solving the Problems

In order to fulfill the above-stated object, the present invention uses wire solder including a solder wire extended linearly and a core wire having tensile resistance higher than that of the solder wire. Although wire solder conventionally used does not have tensile resistance and easily breaks, the core wire having a tension higher than that of the solder wire is provided at a center portion in the same direction as the solder wire, whereby the tensile resistance of the core wire serves as tensile resistance of the wire solder as a whole, and the position of solder can be easily controlled by pulling the wire solder in the drawing-out direction while applying a tensile force to the core wire.

A core wire not according to the invention may be made of a thermosetting resin that does not change in quality at an operating temperature of the solder wire, selected from the group consisting of phenol resin, epoxy resin, melamine resin, aromatic polyamide-based resin (e.g., Kevle: registered trademark of DuPont), carbon fiber and polyimide-based resin. The configuration of such a resin as the core wire may be embodied by means of putting uncured resin at a portion corresponding to a core in a similar manner to putting flux during the manufacturing of wire solder. Thereafter, the resin is cured by heating, whereby a core wire allowing a solder wire to be pulled can be obtained.

As another means, the core wire may include a material that generates heat with Joule heat such as a tungsten wire, a stainless steel wire, a piano wire, an iron wire, an aluminum wire or a copper wire. In this case, instead of the conventional way of melting solder by a soldering iron, Joule heat may be generated at the core wire by an appropriate well-known means, whereby the wire solder melts from a portion close to the core wire, and insufficient melting due to insufficient heating can be prevented. Additionally, such a core wire has high tensile resistance and can exert a function of the core wire demanded by claim 1 sufficiently.

The solder wire may selectively include flux cored wire solder including flux along a center axis (at a core portion). Since flux is provided at the core of the solder wire, there is no need to provide rosin or flux separately, thus facilitating the soldering.

Such wire solder may be supplied by drawing out wire solder before use that is wound around a reel in a typical manner while applying a tensile force to the core wire, and solder is heated and melted at a predetermined position for soldering. In the present invention, a side before use for soldering is called upstream and a side for collecting core wire after soldering is called downstream with reference to the predetermined position for soldering.

A supplying device not according to the invention for such wire solder includes: a solder storage that stores wire solder or a wire solder bundle; and a core wire storage that stores the core wire while collecting the core wire from a front end side of the wire solder. According to the device, while the core wire storage is rotated to collect the core wire, the wire solder or the wire solder bundle is partially heated upstream of the collecting to melt solder for soldering. More specifically, the core wire storage may have a reel structure, and may be rotated by motor driving to collect the core wire. This device can be relatively compact, and is applicable to both of manual operation and automatic operation.

### Advantages

Wire solder according to the present invention can securely avoid easy break of wire solder because of a core wire combined therewith, the core wire having tensile resistance and to which tension can be applied during rewinding and drawing-out.

The material that generates heat with Joule heat as a core enables local heating, and therefore thermal energy can be given only to an extremely small portion for soldering, thus alleviating thermal load to electronic components subject to soldering and so suppressing degradation of electronic components due to high temperatures.

### Brief Description of the Drawings

[Fig. 1] Fig. 1 is a cross-sectional view illustrating exemplary wire solder of the present invention.
[Fig. 2] Fig. 2 is a cross-sectional view illustrating another example.
[Fig. 3] Fig. 3 is a cross-sectional view illustrating still another example.
[Fig. 4] Fig. 4 schematically illustrates an exemplary wire solder supplying device.

### Best Mode for Carrying Out the Invention

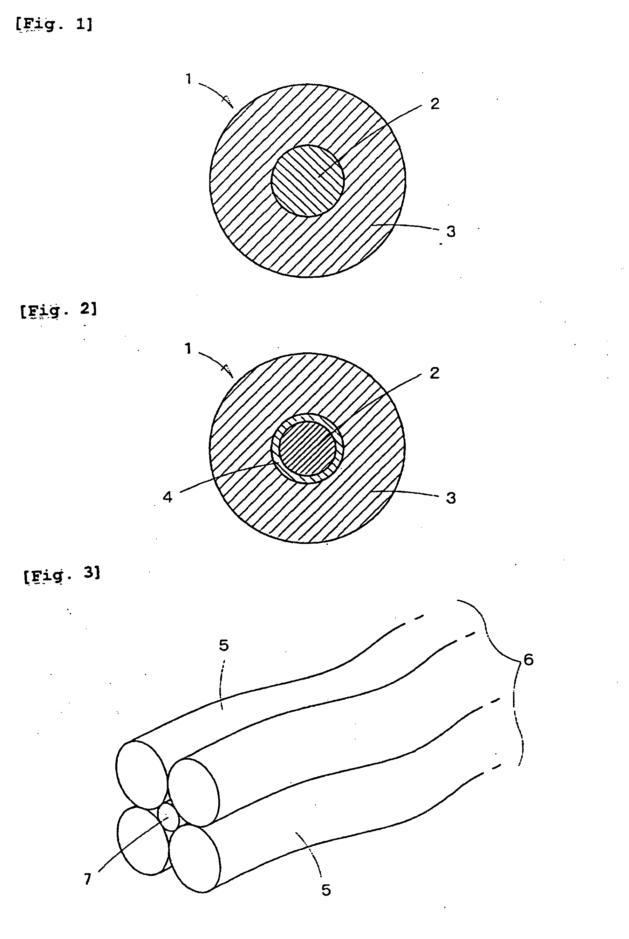

To begin with, one embodiment of wire solder according to the present invention is described. Fig. 1 is a cross-sectional view of wire solder 1 of the present invention, where numeral 2 denotes a core wire and 3 denotes a solder wire. The wire solder includes the core wire 2 as a core of the solder wire 3. The core wire 2 does not have to be strictly positioned at the center of the solder wire 3, but it is understood that the core wire 2 is surrounded with solder alloy. The configuration of the solder wire 3 made of solder alloy missed partially, thus partially exposing the core wire 2, does not have to be excluded. The alloy composition making up the solder wire 3 has any composition as long as the solder wire can function as solder. Fig. 2 illustrates the configuration including flux 4 in addition to the configuration of Fig. 1, where the flux may be contained by conventionally well-known means.

The core wire 2 is made of a high tension material resistant to a method of dragging or pulling from downstream via a soldering position. A tensile-resistant strength does not have to be limited numerically, but may be strong enough not to break easily by a force pulling the core wire 2 toward downstream when operating the wire solder 1. In this manner, the core wire 2 with an extremely small-diameter can be used by selecting a material thereof.

Fig. 3 illustrates a comparative example not according to the invention: a wire solder, including a wire solder bundle 6 made up of a plurality of pieces of wire solder 5 twined, each including solder alloy and flux such as rosin, as well as a high tension core wire 7. The wire solder 5 and the core wire 7 have a relationship such that a plurality of pieces of wire solder are twined around the core wire 7 at a center or the wire solder 5 and the core wire 7 are braided, both of which are naturally included in the present invention, and the specific configuration to make the wire solder bundle 6 one bundle is not limited to these embodiments.

The shape and the size of wire solder of the present invention are not limited especially within a range of effects expected from the present invention. For instance, as for a cross-sectional shape, shapes such as round, oval and polygon can be selected depending on the purpose, and as for a thickness as well, a range of thickness that is generally available can be used without problem, and a wire diameter of 100 µm or less also is possible.

The composition of solder alloy used for the wire solder of the present invention is not limited as stated above. Considering environmental issues, preferable compositions for the solder alloy include lead-free solder such as Sn-Cu alloy and Sn-Ag alloy. Even solder containing Pb, however, does not affect the present invention substantially.

The core wire 2 used in the present invention is requested to have high tension and do not change in quality at soldering temperatures so as to have the effects of the present invention, and a thermosetting resin or a material that generates Joule heat may be disclosed for this purpose, for example. The core wire 2 is requested to have tension that does not easily break in a method of dragging or pulling the core wire when supplying wire solder, and other properties are not limited especially within a range of not impairing soldering. The core wire 2 is requested to have a heat resistant property that does not change in quality at temperatures during soldering, and one that does not change in quality at a temperature around 400°C that is slightly higher than 370°C as a temperature of a soldering tip typically used for soldering of lead-free solder may be used without problem. Note here that, when a low melting point solder alloy is used for the wire solder, a temperature lower than the above-stated temperature may be set at a limit temperature for quality change without problem.

As for the materials of the core wire 2 illustrated above, exemplary thermosetting resins include phenol resin, epoxy resin, melamine resin and the like. In the case of a thermosetting resin, the resin should be made of a material that cures at a temperature lower than a solder melting point, and a standard curing temperature is preferably lower than about 130°C that is a melting point of a typical low melting point solder. Exemplary materials that generate Joule heat include a tungsten wire, a stainless steel wire, a piano wire, an iron wire, an aluminum wire, a copper wire and the like that generate heat by high-frequency heating, current or the like as one type of Joule heat.

According to a wire solder supplying method, wire solder is supplied to a soldering position by dragging or pulling a core wire of high tension from downstream via the soldering position. As long as wire solder is supplied to a soldering position by dragging or pulling the core wire from downstream, a position or a direction for guiding the core wire or for dragging or pulling the core wire is not limited especially.

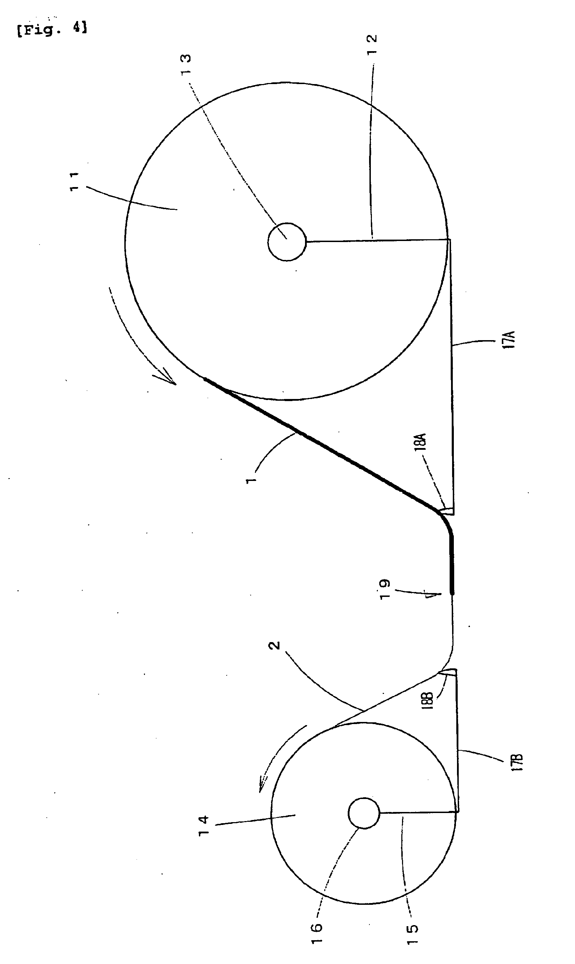

Fig. 4 illustrates an exemplary device of supplying wire solder to a soldering position, which is applicable to wire solder in all embodiments of the present invention. In this drawing, numeral 11 denotes a solder storage having a reel structure to store the wire solder 1, 12 denotes a strut that rotatably supports a center shaft 13 of the solder storage 11, 14 denotes a core wire storage that has a reel structure to store the core wire 2, and 15 denotes a strut that rotatably supports a center shaft 16 of the core wire storage 14. The struts 12 and 15 are stably provided at bases 17A and 17B respectively, and these bases may be common to the struts. Numerals 18A and 18B denote gates to linearly hold the wire solder and the core wire respectively, at a center portion of which is an area 19 where soldering is performed. Herein, the reel of the solder storage 11 is not driven and freely rotates, whereas the reel of the core wire storage 14 is driven. Although the driving force may be manually given, the rotation can be controlled precisely by a step motor or a servo motor.

In the above-stated wire solder supplying device, the rotation of the core wire storage 14 lets the wire solder 1 out from the solder storage 11, which is then supplied to the area 19 where soldering is performed via the gate 18A. When soldering is completed, the core wire only passes through the gate 18B and is stored to the core wire storage 14. In this case, the gates 18A and 18B have a function of supplying the wire solder 1 to the area 19 precisely, and Teflon(Trademark) coating applied to the surface of the gates 18A and 18B enables smooth supplying of the wire solder 1 without scratches occurring on the wire solder 1.

### Industrial Applicability

Wire solder of the present invention allow wire solder to be supplied to a soldering position simply and precisely. Further, the present invention is applicable irrespective of the composition of ingredients in wire solder, and therefore is widely applied to the mounting of electronic components.

### Reference Numerals

- 1: Wire solder
- 2: Core wire
- 3: Solder wire
- 4: Flux

## Claims

1. Wire solder comprising a solder wire extended linearly and a core wire having tensile resistance higher than that of the solder wire, the core wire comprising a material that generates Joule heat.

2. The wire solder according to claim 1, wherein the core wire comprises one metal wire selected from the group of a tungsten wire, a stainless steel wire, a piano wire, an iron wire, an aluminum wire and a copper wire.

3. The wire solder according to claim 1 or 2, wherein the solder wire comprises a flux cored solder wire including flux along a center axis.

## Patentansprüche

1. Drahtlötzinn mit einem Lötzinndraht, der sich linear erstreckt, und einem Kerndraht mit einer Zugfestigkeit, die höher als diejenige des Lötzinndrahts ist, wobei der Kerndraht ein Material aufweist, das Joule-Wärme erzeugt.

2. Drahtlötzinn nach Anspruch 1, wobei der Kerndraht einen Metalldraht aufweist, der aus der Gruppe eines Wolframdrahts, eines rostfreien Stahldrahts, eines Klaviersaitendrahts, eines Eisendrahts, eines Aluminiumdrahts und eines Kupferdrahts ausgewählt ist.

3. Drahtlötzinn nach Anspruch 1 oder 2, wobei der Lötzinndraht einen mit Flussmittel gefüllten Lötzinndraht aufweist, der Flussmittel entlang einer Mittenachse enthält.

## Revendications

1. Soudure au fil comprenant un fil de soudure étendu linéairement et un fil noyau ayant une résistance à la traction supérieure à celle du fil de soudure, le fil noyau comportant un matériau qui génère de la chaleur de Joule.

2. Soudure au fil suivant la revendication 1, dans laquelle le fil noyau comprend un fil métallique sélectionné parmi le groupe constitué par un fil de tungstène, un fil d'acier inoxydable, un fil à piano, un fil de fer, un fil d'aluminium et un fil de cuivre.

3. Soudure au fil suivant la revendication 1 ou 2, dans laquelle le fil de soudure comprend un fil fourré comportant un fondant le long d'un axe central.
